# EUROPEAN PATENT SPECIFICATION

(11) **EP 2 308 701 B1**
(45) Date of publication and mention of the grant of the patent: **25.01.2012**
(21) Application number: 09172438.5
(22) Date of filing: 07.10.2009
(51) Int. Cl.: B60G 5/03, B60G 5/047, B62D 61/12

(54) **Axle suspension system for a vehicle rear axle and additional axle**
Achsenaufhängungssystem für Fahrzeughinterachsen und zusätzliche Achsen
Système de suspension d'essieu pour essieu arrière de véhicule et essieu supplémentaire

(43) Date of publication of application: 13.04.2011
(73) Proprietor: IVECO MAGIRUS AG, 89079 Ulm (DE)
(72) Inventor: Baur, Guenter, 73340, AMSTETTEN (DE); Kaiser, Markus, 89075, ULM (DE)
(74) Representative: Borsano, Corrado

(56) References cited:
- EP-A1- 0 416 310
- FR-A1- 2 496 015
- US-A- 4 530 515
- US-A- 4 756 550
- US-A1- 2002 067 017
- US-A1- 2004 164 511
- US-A1- 2004 232 646

## Description

The present invention concerns an axle suspension system for a driven rear axle of a vehicle, especially a heavy goods vehicle, and an additional axle disposed in front of the latter, as per the preamble of claim 1.

Axle suspension systems for vehicles already exist in many different embodiments. For the rear axles of heavy goods vehicles in particular, there are prior art axle suspensions in which a suspension sword is disposed on each side of the vehicle, said suspension sword extending in front of the rear axle downward from the vehicle chassis to provide a coupling point for a longitudinal control arm which connects the rear axle with the suspension sword. Guidance in the longitudinal direction is provided via the longitudinal control arm during the outward and inward spring deflections of the rear axle. Other components of the rear axle suspension include devices for shock absorption and other suspension constructions for guidance purposes, as are generally found in the field of vehicle construction.

Further, suspension systems are known of for a non-driven additional axle disposed in front of the driven rear axle in the direction of travel of the vehicle. These additional axle suspensions also comprise longitudinal control arms on the vehicle sides, each of which is connected at one end to the additional axle and, at the other end, to the vehicle chassis. In this case, the longitudinal control arm provides the lateral guidance for the additional axle. In the prior art arrangements, this longitudinal control arm extends forwards in the direction of the vehicle to a coupling point on the vehicle chassis, or to a bracket mounted on the latter.

The forward-extending longitudinal control arm of the additional axle suspension occupies a relatively large amount of space in the vehicle undermount, as do the construction parts attached to it, such as a bracket for connecting the end of the longitudinal control arm to the vehicle chassis. This is particularly problematic in relation to chassis constructions which widen towards the front and have offset chassis longitudinal supports, as the task of connecting the forward-pointing longitudinal control arm is difficult in this case. The entire axle suspension system, including the rear axle suspension and the additional axle suspension, is a relatively large and complex construction in the vehicle's longitudinal direction.

Axle suspension systems of the above type are described in published documents US 2002/067017 and FR 2496015. In particular US 2002/067017 discloses an axle suspension system for a driven rear axle of a vehicle, especially a heavy goods vehicle, and an additional axle disposed in front of the latter, with a rear axle suspension, comprising a suspension sword on each side of the vehicle which extends in front of the rear axle downward from vehicle chassis, and a longitudinal control arm which is pivotally connected to the bottom end of the respective suspension sword and extends rearward from the latter to rear axle, and with an additional axle suspension, comprising a longitudinal control arm on each side of the vehicle, which is connected at one end to additional axle and at the other end to vehicle chassis, wherein the longitudinal control arm of additional axle suspension extends from additional axle rearward to suspension sword of rear axle suspension and is pivotally connected to this latter.

The task of this invention is therefore to simplify the axle suspension system of the above type, and to design it in a more compact fashion so that the required construction parts can be accommodated without problem in the vehicle undermount in a restricted space.

This task is solved according to the invention by an axle suspension system with the features of claim 1.

According to the invention, the longitudinal control arm of the additional suspension is contrived so that it extends rearwards from the additional axle to the suspension sword of the rear axle suspension. It is flexibly connected to this suspension sword by means of a corresponding articulated connection.

Hence the axle suspension system according to the invention uses the suspension sword to connect the longitudinal control arm of the additional axle suspension such that this latter is guided laterally. Further, the additional axle suspension no longer has any parts extending from the additional axle to the front chassis section. Thus the additional axle can, for example, be disposed right up against a laterally expanding portion of the vehicle chassis with offset chassis longitudinal supports. The entire arrangement of the axle suspension system is more compact and requires fewer parts than the prior art axle suspensions in which the rear axle and additional axle suspensions are independent of each other.

In this construction the additional axle is not pulled, as is the case with the additional axle suspensions described in the introduction to the description, but is pushed by the rigid parts of the rear axle suspension.

According to a preferred embodiment of the present invention, the coupling point of the longitudinal control arm of the additional axle suspension is positioned higher up the suspension sword than the coupling point of the longitudinal control arm of the rear axle suspension. According to another preferred embodiment, the suspension sword has at least two articulated receiving elements disposed one above the other for alternatively receiving the end of the longitudinal control bar of the additional axle suspension.

This embodiment therefore allows one to choose the height at which the longitudinal control arm of the additional axle suspension is attached to the suspension sword, depending on the height of the vehicle undermount and the circumstances in relation to a raisably suspended additional axle or similar.

The longitudinal control arm of the additional axle suspension is preferably contrived as a suspension spring. Compared to a longitudinal control arm contrived as a rigid component, the advantage of using a suspension spring is that it is better able to absorb the lateral forces occurring along the axle thanks to its elastic properties. According to a preferred embodiment, the suspension spring of the additional axle suspension comprises two leaf springs disposed above each other, in parallel.

According to another preferred embodiment, the additional axle suspension comprises means to lift the additional axle relative to the vehicle chassis.

A preferred example of an embodiment of the invention will be described below with reference to the drawings, in which
- Fig. 1: is a side view of an embodiment of the axle suspension system according to the invention, and
- Fig. 2: is a perspective view of the axle suspension system of Fig. 1.

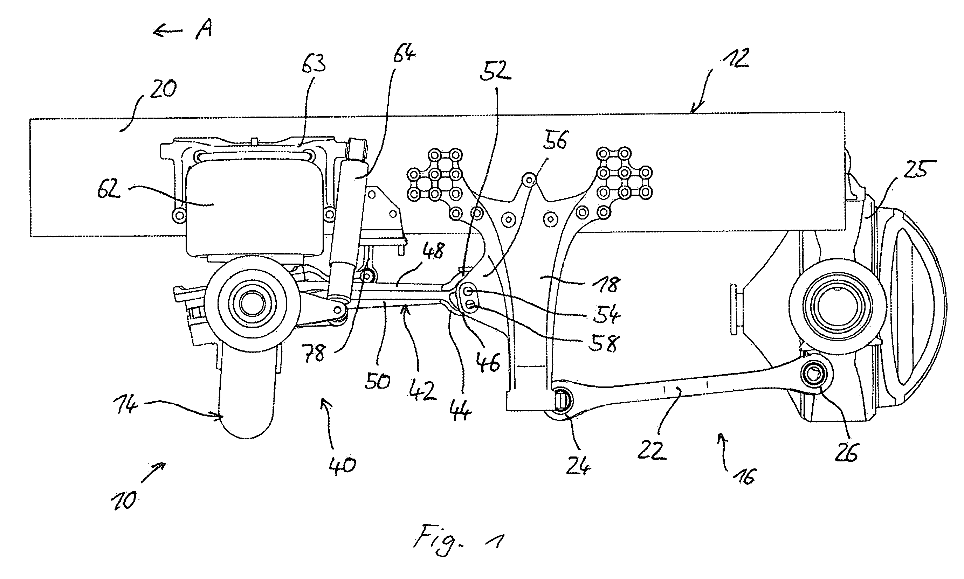

The axle suspension system 10 shown in Fig. 1 serves to suspend a driven rear axle and an additional axle disposed in front of it in the direction of travel, of a vehicle whose vehicle chassis is designated in general by reference 12. The direction of travel is indicated in this figure by an arrow A (towards the left). Additional axle 14 is an offset axle which, in its mid portion underneath vehicle chassis 12, provides space for the drive shaft (not shown in more detail) to pass through to the rear axle.

Rear axle suspension 16 comprises, on each side of the vehicle, a suspension sword 18 which is laterally connected by its upper end to a chassis longitudinal support 20 and extends downwards from vehicle chassis 12.

At the lower end of suspension sword 18, a longitudinal control arm 22 is pivotally connected to suspension sword 18 via a joint element 24. Longitudinal control arm 22 extends from suspension sword 18 contrary to the direction of travel A, towards the rear, up to rear axle 25. The rear end 26, which is depicted freely in Fig. 1, of longitudinal control arm 22 is connected to rear axle 25.

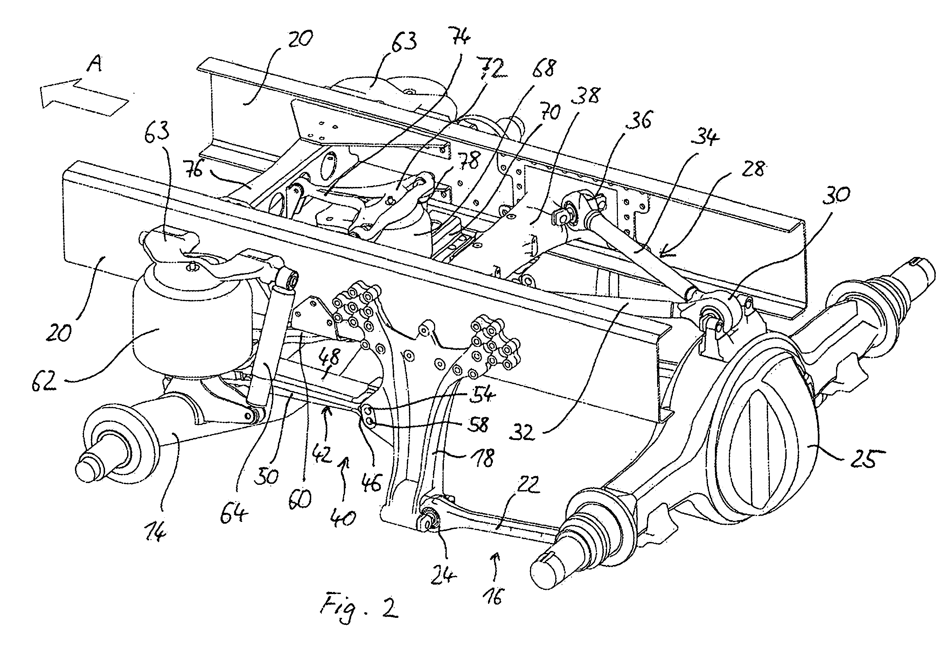

Another part of rear axle suspension 16 is formed by a triangular support 28 (Fig. 2). The rear end 30 of triangular support 28, at which point both arms 32,34 of triangular support 28 converge, is connected to the top side of rear axle 25. The forward-pointing ends 36 of arms 32,34 are connected on the inside to longitudinal supports 20 of chassis 12. Directly in front of the coupling points 36 between triangular support 28 and chassis 12, a cross-strut 38 of chassis 12 is positioned to provide stabilisation.

Additional axle suspension 40 comprises, on each side of the vehicle, a suspension spring 42, which is rigidly connected to additional axle 14 by its front end in relation to the direction of travel A, and to suspension sword 18 by its rear end 44. The connection is provided by a joint element 46 disposed at the rear end 44 of suspension spring 42. The suspension springs 42 of additional axle suspension 40 are formed by two parallel leaf springs 48,50 which, one positioned above the other, start out from a fixed point of attachment on additional axle 14 and run rearward to converge at a spring eye 52 which forms part of joint element 46. The other part is formed by a pin which is inserted in a hole 54 contrived in a forward-pointing flange 56 of suspension sword 18. A second hole 58 is provided immediately underneath the first hole 54 in flange 56. The two holes 54,58 form two alternative joint receiving elements, disposed one above the other, for receiving the end 44 of suspension spring 42. Thus spring eye 46 may be suspended by a pin in either upper hole 54 or lower hole 58.

The forward-pointing ends of leaf springs 48,50 of suspension spring 42 are clamped onto the axle body of additional axle 14 by a clamping plate 60 (see Fig. 2). Beyond clamping plate 60 there is further a supporting bellows 62, whose top side rests against a bracket 63 which is flange-mounted to the side of chassis longitudinal support 20. Relative to the direction of travel A, a shock absorber 64 is disposed behind supporting bellows 62, and is pivotally connected by its upper end to bracket 63 and by its lower end to additional axle 14.

Additional axle suspension 40 further comprises means for lifting additional axle 14 relative to vehicle chassis 12. These means comprise air bellows 68 disposed in the middle of vehicle chassis 12, whose underside rests on a chassis cross-strut 70. Resting on air bellows 68 there is a lever 72, which is pivotally connected, by an end 74 pointing forwards in the direction of travel of vehicle A, to another chassis cross-strut 76. When air bellows 68 rise or fall, the rear end of lever 72 is pivoted upwards or downwards around the coupling point on the front chassis cross-strut 76. This provides lateral stabilisation for the upwards and downwards movement of air bellows 68.

Pivotally connected to the end of lever 72 resting on air bellows 68, and at each side thereof, there are approximately vertical arms 78, whose bottom ends are in turn pivotally connected to the inwardly pointing ends of clamping plates 60. Vertical arms 78 form, together with clamping plates 60, traction means for lifting additional axle 14. When air bellows 68 expand and lift lever 72, arms 78 exercise tractive force on additional axle 14 via clamping plates 60. For the purpose of creating a connection between lever 72 and clamping plates 60, vertical arms 78 are guided through openings in chassis cross-strut 70, on which air bellows 68 rests.

During the rising and falling of additional axle 14, suspension springs 42 of additional axle suspension 40 also complete a pivoting movement around joint elements 46 on suspension swords 18. This also takes place when additional axle 14 undergoes inward spring deflection.

According to the invention, suspension swords 18 of the rear axle suspension also provide an attachment element for suspension springs 42 of the additional axle suspension, which is disposed in front of rear axle 25 relative to the direction of travel A. In this manner, a joint axle suspension system 10 is formed for the rear axle and additional axle 14. As rear axle suspension 40 has virtually no parts pointing forward from additional axle 14 in the direction of travel A, additional axle suspension 40 can be disposed relatively close to other assemblies in the vehicle undermount, or close to an offset portion of chassis longitudinal supports 20 for the purpose of widening vehicle chassis 12.

## Claims

1. Axle suspension system (10) for a driven rear axle (25) of a vehicle, especially a heavy goods vehicle, and an additional axle (14) disposed in front of the latter, with a rear axle suspension (16), comprising a suspension sword (18) on each side of the vehicle which extends in front of the rear axle downward from vehicle chassis (12), and a longitudinal control arm (22) which is pivotally connected to the bottom end of the respective suspension sword (18) and extends rearward from the latter to rear axle (25), and with an additional axle suspension (40), comprising a longitudinal control arm (42) on each side of the vehicle, which is connected at one end to additional axle (14) and at the other end (44) to vehicle chassis (12), wherein the longitudinal control arm (42) of additional axle suspension (40) extends from additional axle (14) rearward to suspension sword (18) of rear axle suspension (16) and is pivotally connected to this latter, **characterised in that** the coupling point of longitudinal control arm (42) of additional axle suspension (40) lies higher up on the suspension sword (18) than the coupling point of the longitudinal control arm (22) of rear axle suspension (16).

2. The axle suspension system of claim 1 or 2, **characterised in that** suspension sword (18) has at least two joint receiving elements (54,58), disposed one above the other, providing alternative means of receiving end (44) of longitudinal control arm (42) of additional axle suspension (40).

3. The axle suspension system of one of the preceding claims, **characterised in that** the longitudinal control arm (42) of additional axle suspension (40) is contrived as a suspension spring.

4. The axle suspension system of claim 4, **characterised in that** suspension springs (42) of additional axle suspension (40) comprise two leaf springs (48,50) disposed one above the other, in parallel.

5. The axle suspension system of one of the preceding claims, **characterised in that** the additional axle suspension (40) comprises means for lifting additional axle (14) relative to vehicle chassis (12).

## Patentansprüche

1. Achsaufhängungssystem (10) für eine angetriebene Hinterachse (25) eines Fahrzeugs, insbesondere eines Lastkraftwagens, und eine zusätzliche Achse (14), die vor der letzteren angeordnet ist, mit einer Hinterachsaufhängung (16), die ein Aufhängungsschwert (18) auf jeder Seite des Fahrzeugs, das sich vor der Hinterachse von dessen Fahrzeugchassis (12) nach unten erstreckt, und einen Längslenker (22) umfasst, der schwenkbar mit dem unteren Ende des jeweiligen Aufhängungsschwerts (18) verbunden ist und sich von der letzteren nach hinten zu der Hinterachse (25) erstreckt, und mit einer zusätzlichen Achsaufhängung (40), die einen Längslenker (42) auf jeder Seite des Fahrzeugs umfasst, der an einem Ende mit der zusätzlichen Achse (14) und an dem anderen (44) mit dem Fahrzeugchassis (12) verbunden ist, wobei sich der Längslenker (42) der zusätzlichen Achsaufhängung (40) von der zusätzlichen Achse (14) nach hinten zu dem Aufhängungsschwert (18) der Hinterachsaufhängung (16) erstreckt und schwenkbar mit dieser letzteren verbunden ist,
**dadurch gekennzeichnet, dass**
der Kopplungspunkt des Längslenkers (42) der zusätzlichen Achsaufhängung (40) höher oben an dem Aufhängungsschwert (18) als der Kopplungspunkt des Längslenkers (22) der Hinterachsaufhängung (16) liegt.

2. Achsaufhängungssystem nach Anspruch 1 oder 2,
**dadurch gekennzeichnet, dass**
das Aufhängungsschwert (18) zumindest zwei Gelenkaufnahmeelemente (54, 58) aufweist, die übereinander angeordnet sind, wodurch alternative Mittel eines Aufnahmeendes (44) des Längslenkers (42) der zusätzlichen Achsaufhängung (40) bereitgestellt sind.

3. Achsaufhängungssystem nach einem der vorhergehenden Ansprüche,
**dadurch gekennzeichnet, dass**
der Längslenker (42) der zusätzlichen Achsaufhängung (40) als eine Tragfeder ersonnen ist.

4. Achsaufhängungssystem nach Anspruch 4,
**dadurch gekennzeichnet, dass**
die Tragfedern (42) der zusätzlichen Achsaufhängung (40) zwei Blattfedern (48, 50) umfassen, die übereinander parallel angeordnet sind.

5. Achsaufhängungssystem nach einem der vorhergehenden Ansprüche,
**dadurch gekennzeichnet, dass**
die zusätzliche Achsaufhängung (40) Mittel zum Anheben der zusätzlichen Achse (14) relativ zu dem Fahrzeugchassis (12) umfasst.

## Revendications

1. Système de suspension d'essieu (10) pour un essieu moteur arrière (25) d'un véhicule, en particulier un poids lourd, et un essieu additionnel (14) disposé devant ce dernier, avec une suspension d'essieu arrière (16), comprenant une épée de suspension (18) de chaque côté du véhicule qui s'étend devant l'essieu arrière vers le bas depuis un châssis de véhicule (12), et un bras de commande longitudinal (22) qui est raccordé avec faculté de pivotement à l'extrémité inférieure de l'épée de suspension respective (18) et s'étend vers l'arrière depuis cette dernière vers l'essieu arrière (25), et avec une suspension d'essieu additionnelle (40), comprenant un bras de commande longitudinal (42) de chaque côté du véhicule qui est raccordé à une extrémité à l'essieu additionnel (14) et à l'autre extrémité (44) au châssis du véhicule (12), où le bras de suspension longitudinal (42) de la suspension d'essieu additionnelle (40) s'étend depuis l'essieu additionnel (14) en arrière vers l'épée de suspension (18) de la suspension d'essieu arrière (16) et est raccordé avec faculté de pivotement à cette dernière, **caractérisé en ce que** le point d'accouplement du bras de commande longitudinal (42) de la suspension d'essieu additionnelle (40) se trouve plus haut sur l'épée de suspension (18) que le point d'accouplement du bras de suspension longitudinal (22) de la suspension d'essieu arrière (16).

2. Système de suspension d'essieu selon la revendication 1 ou 2, **caractérisé en ce que** l'épée de suspension (18) comporte au moins deux éléments de réception de joint (54, 58), disposés l'un au-dessus de l'autre, conférant d'autres moyens de recevoir l'extrémité (44) du bras de commande longitudinal (42) de la suspension d'essieu additionnelle (40).

3. Système de suspension d'essieu selon l'une des revendications précédentes, **caractérisé en ce que** le bras de commande longitudinal (42) de la suspension d'essieu additionnelle (40) est agencé comme un ressort de suspension.

4. Système de suspension d'essieu selon la revendication 3, **caractérisé en ce que** des ressorts de suspension (42) de la suspension d'essieu additionnelle (40) comprennent deux ressorts à lame (48, 50) disposés l'un par-dessus l'autre, en parallèle.

5. Système de suspension d'essieu selon l'une des revendications précédentes, **caractérisé en ce que** la suspension d'essieu additionnelle (40) comprend un moyen permettant de relever l'essieu additionnel (14) par rapport au châssis du véhicule (12).
